(19) Europäisches Patentamt
European Patent Office
Office européen des brevets

(11) Numéro de publication : **0 113 297**
**B1**

## (12) FASCICULE DE BREVET EUROPÉEN

(45) Date de publication du fascicule du brevet : **20.08.86**

(51) Int. Cl.⁴ : **C 10 G 65/04**, C 10 G 45/04

(21) Numéro de dépôt : **83402556.1**

(22) Date de dépôt : **29.12.83**

# (54) Procédé d'hydrotraitement convertissant en au moins deux étapes une fraction lourde d'hydrocarbures contenant des impuretés soufrées et des impuretés métalliques.

(30) Priorité : **31.12.82 FR 8222180**

(43) Date de publication de la demande : **11.07.84 Bulletin 84/28**

(45) Mention de la délivrance du brevet : **20.08.86 Bulletin 86/34**

(84) Etats contractants désignés : **BE DE GB IT NL SE**

(56) Documents cités :
**EP-A- 0 055 164**
**FR-A- 2 528 721**
**GB-A- 2 069 363**
**US-A- 3 696 027**

(73) Titulaire : **INSTITUT FRANCAIS DU PETROLE**
**4, Avenue de Bois-Préau**
**F-92502 Rueil-Malmaison (FR)**

(72) Inventeur : **Toulhoat, Hervé**
**8, rue de Seine**
**F-78230 Le Pecq (FR)**
Inventeur : **Plumail, Jean-Claude**
**26, rue de Verdun**
**F-78110 Le Vésinet (FR)**
Inventeur : **Billon, Alain**
**Le Benneton**
**F-69530 Orlienas (FR)**
Inventeur : **Quignard, Alain**
**15, Avenue Maurice Ravel**
**F-69140 Rillieux-la-Pape (FR)**

EP 0 113 297 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne le raffinage de fractions lourdes d'hydrocarbures liquides, contenant entre autres des impuretés soufrées et métalliques, tels que les résidus atmosphériques, les résidus sous vide, les pétroles bruts lourds, les huiles désasphaltées, les brais et les asphaltes en mélange avec un distillat aromatique, les hydrogénats de charbon.

Le problème posé par le raffinage de ces fractions est de réaliser leur transformation en coupes plus légères, débarassées des impuretés hétéro-atomiques, au rapport hydrogène sur carbone (H/C) amélioré, susceptibles de servir de bases pour la production de carburants tels que fuels, gazole et essence. On a déjà proposé, pour atteindre cet objectif, d'utiliser des procédés d'hydrotraitement, vocable général désignant les procédés mettant en œuvre les réactions chimiques de l'hydrogène sur les fractions à raffiner, en présence d'un ou de plusieurs catalyseurs, à des températures généralement comprises entre 250 et 450 degrés C et sous des pressions généralement comprises entre 0,1 et 30 MPa.

Cependant, dans l'état actuel de la technique, il n'est pas possible de traiter de façon économique les charges contenant des teneurs même aussi faibles que 10 parties par million d'impuretés métalliques telles que le nickel, le vanadium, le fer, le titane, etc ... En effet ces impuretés précipitent dans les pores des catalyseurs d'hydrotraitement et sont une des causes principales de la désactivation rapide irréversible de ces catalyseurs qui peuvent, en général supporter tout au plus l'accumulation de quelques grammes de métaux par cent grammes dans leur porosité avant de perdre le pouvoir notamment désulfurant nécessaire pour remplir les spécifications requises pour les produits. Les durées de cycle sont alors très faibles, ce qui conduit à une baisse de productivité importante des unités, et les consommations de catalyseurs entraînent des coûts opératoires prohibitifs.

Une importante amélioration a toutefois été apportée récemment (demande de brevet français numéro 82/10 757 du 17 juin 1982 publiée sous le numéro 2 528 721) par la description de catalyseurs possédant une activité de démétallation élevée, liée à une grande résistance aux poisons. Ces catalyseurs possèdent d'autres propriétés utiles, notamment une certaine activité de désulfuration. La demande de brevet européen EP-A 55 164 décrit la production d'un support de catalyseur du même type.

La demanderesse a découvert que l'on pouvait avoir avantage à traiter les charges résiduelles en au moins deux étapes, la finalité de la première étape étant principalement de démétalliser et hydrocraquer la charge, avec désulfuration modérée, et celle de la dernière étape de désulfurer de manière poussée.

Un important avantage de l'opération en au moins deux étapes est que la captation des impuretés métalliques, facteur essentiel de désactivation irréversible de la fonction désulfurante des catalyseurs d'hydrotraitement, est pour la majeure partie localisée à la première étape pour laquelle on emploie un catalyseur tel que ceux décrits dans la demande de brevet français FR-A 2 528 721 et dont le support possède de préférence la propriété d'inertie au test de craquage du normal heptane défini par la suite. Cette propriété d'inertie accroît la résistance à la désactivation par dépôt de carbone, qui est une autre cause principale d'empoisonnement des catalyseurs d'hydrotraitement. Les catalyseurs ainsi définis ont un pouvoir de captation très élevé des impuretés métalliques sans présenter de désactivation importante de leur fonction démétallisante et hydrocraquante : on obtient alors à l'issue de la première étape un produit fortement démétallisé et enrichi en fractions distillables de point d'ébullition normal inférieur à par exemple 550 degrés C. Ce produit est encore trop riche en impuretés soufrées, et le raffinage doit être poursuivi aux étapes subséquentes, la dernière étape effectuant une désulfuration profonde affectant jusqu'aux impuretés soufrées parmi les plus réfractaires du fait que l'on utilise à cette étape un catalyseur à pouvoir désulfurant élevé protégé contre la désactivation par le ou les catalyseurs des étapes précédentes.

Un autre important avantage de l'opération en deux étapes est de fournir, outre une importante fraction de produits distillables, une fraction résiduelle non distillable en dessous de 550 degrés C, dont la viscosité et les teneurs en hétéro-atomes et insolubles à l'heptane normal et au pentane normal sont plus faibles que celles de la fraction résiduelle non distillable de la charge initiale. Cette fraction résiduelle pourra en général entrer dans la classe des combustibles dits fiouls numéro deux, ou encore être partiellement recyclée en mélange avec la charge initiale à l'entrée de la première étape du procédé.

La demanderesse a ainsi découvert un procédé de traitement de fractions lourdes hydrocarbonées renfermant des impuretés soufrées et des impuretés métalliques, permettant de manière surprenante d'opérer de façon très stable pendant des périodes de plusieurs mois voire supérieures à un an, tout en produisant des hydrocarbures liquides à très basse teneur en hétéro-atomes, notamment métaux et soufre, convenant pour une utilisation directe comme carburants et combustibles ou comme charges pour les procédés d'hydrocraquage ou de craquage catalytique. Plus surprenant encore est le fait que ce procédé réalise déjà une conversion très importante de la charge lourde en distillats, ce qui diminue d'autant la nécessité de recours aux procédés de craquage mentionnés ci-dessus : une raffinerie opérant le procédé de l'invention n'aura donc pas à supporter les très coûteux investissements et frais opératoires liés à une création ou une augmentation de capacité en ces procédés de craquage.

Le procédé de l'invention comprend les étapes successives suivantes :

a) Dans au moins une première étape, dont la finalité essentielle est la démétallation, on fait passer la charge d'hydrocarbures mélangée à de l'hydrogène, sur un catalyseur du type décrit dans la demande de

brevet fançais numéro FR-A 2 528 721, renfermant de 0,1 à 5 % en poids, comptés en oxydes métalliques, d'au moins un métal ou composé de métal de l'un au moins des groupes V, VI et VIII de la classification périodique des éléments. Le support de ce catalyseur est de préférence inerte dans le test d'hydrocraquage du normal heptane. On réalise habituellement au cours de cette première étape de 60 à 95 % de démétallation, le taux de conversion de la fraction bouillant normalement au-dessus de 550 degrés C en fraction bouillant normalement au-dessous de 550 degrés C est de préférence compris entre 20 et 99 %. Enfin, le taux de désulfuration est modéré, le plus souvent inférieur à 70 %.

b) Dans au moins une étape subséquente, dont la finalité essentielle est la désulfuration, on fait passer le produit de l'étape (a), mélangé à de l'hydrogène, sur un catalyseur renfermant de 7 à 30 % exprimés en poids d'oxydes, d'au moins un métal ou composé de métal de l'un au moins des groupes V, VI et VIII et un support. A l'issue de l'étape (b), le taux de désulfuration global dépasse facilement 85 %.

Le test de craquage du normal heptane d'un support de catalyseur est réalisé en présence d'hydrogène, sous une pression totale de 1 MPa, le rapport hydrogène sur heptane étant égal à 4 normaux litres par litre, la vitesse spatiale horaire de 1,5 gramme de normal heptane par gramme de support et par heure. Un support inerte, par définition, est un support qui dans le test ci-dessus présente une activité inférieure à 15 millionièmes de mole de normal heptane craquées par heure et par mètre carré de surface spécifique à 500 degrés C et inférieure à 5 millionièmes de mole/h/$m^2$ à 470 degrés C.

De préférence le catalyseur de l'étape (b) contient au moins un composé de tungstène et/ou molybdène et au moins un composé de cobalt et/ou de nickel, le rapport pondéral des métaux Co et/ou Ni : Mo et/ou W étant compris entre 0,2 : 1 et 0,5 : 1. De préférence le rapport du poids total d'oxydes métalliques de Co et/ou Ni et Mo et/ou W à la surface spécifique est compris entre 8 et 12 grammes par 10 000 $m^2$.

En prenant la charge initiale pour base de comparaison, le produit final peut aisément être démétallisé à au moins 98 %, désulfuré à au moins 85 %, et le taux de conversion de la fraction bouillant normalement au dessus de 550 degrés C est aisément d'au moins 30 %. Ce taux de conversion (Conv. 550—) est défini comme le rapport de la différence entre les quantités en % poids de cette fraction dans la charge initiale et dans le produit final à la quantité en % poids de cette fraction dans la charge initiale le tout multiplié par 100.

Quand on opère dans trois zones de réaction ou davantage, les catalyseurs de la ou des étapes intermédiaires peuvent répondre à la définition de l'étape (a) ou de l'étape finale (b) ou avoir une composition intermédiaire.

Comme support on utilise, par exemple, une silice, une silice alumine ou de préférence une alumine. Ce support est de préférence inerte dans le test à l'heptane, pour l'étape (a). Pour l'étape (b) le choix est plus large et un catalyseur usuel d'hydrodésulfuration pourra convenir, bien que l'on préfère utiliser le même support dans les deux étapes.

Les catalyseurs utilisés dans les différentes étapes du procédé ont une surface spécifique comprise entre 50 et 350 $m^2/g$, et un volume poreux total compris entre 0,4 et 2,0 $cm^3/g$. On utilise au moins pour l'étape (a), un catalyseur de surface spécifique comprise entre 50 et 250 $m^2/g$, plus particulièrement l'un des catalyseurs décrits dans la demande de brevet FR-A 2 528 721 du 17 juin 1982 dont la description est incorporée ici par voie de référence et dont les informations essentielles sont reprises ci-après :

Ces catalyseurs se présentent sous forme d'une pluralité d'agglomérats juxtaposés formés chacun d'une pluralité de plaquettes aciculaires, les plaquettes de chaque agglomérat étant orientées généralement radialement les unes par rapport aux autres et par rapport au centre de l'agglomérat. En règle générale, une large proportion, le plus souvent au moins 50 % des plaquettes aciculaires, ont une dimension suivant leur axe de plus grand développement comprise entre 0,05 et 5 micromètres et de préférence entre 0,1 et 2 micromètres, un rapport de cette dimension à leur largeur moyenne compris entre 2 et 20, et de préférence entre 5 et 15, un rapport de cette dimension à leur épaisseur moyenne compris entre 1 et 5 000, et de préférence entre 10 et 200. Une large proportion, le plus souvent au moins 50 % des agglomérats de plaquettes aciculaires constitue une collection de particules pseudo-sphériques de taille moyenne comprise entre 1 et 20 micromètres, de préférence entre 2 et 10 micromètres. Des images très adéquates pour représenter une telle structure sont par exemple un tas de bogues épineuses de châtaignes, ou encore un tas d'oursins de mer.

Pour préparer ces catalyseurs, on part d'agglomérés d'alumine qui présentent eux-mêmes la structure décrite ci-dessus et qui peuvent être obtenus, par exemple, comme suit :

a) On traite des agglomérés d'alumine dans un milieu aqueux constitué d'un mélange d'au moins un acide permettant de dissoudre au moins une partie de l'alumine des agglomérés et d'au moins un composé apportant un anion capable de se combiner avec les ions aluminium en solution, ce dernier composé étant un individu chimique distinct de l'acide précité.

b) On soumet simultanément ou subséquemment les agglomérés ainsi traités à un traitement à une température comprise entre environ 80 degrés C et environ 250 degrés C pendant une période comprise entre environ quelques minutes et environ 36 heures.

c) On sèche éventuellement les agglomérés et on les soumet à une activation thermique à une température comprise entre environ 500 degrés C et environ 1 100 degrés C.

On entend par acide permettant de dissoudre au moins une partie de l'alumine des agglomérés tout acide qui, mis en contact avec les agglomérés d'alumine active définis ci-dessus, réalise la mise en solution d'au moins une partie des ions aluminium. L'acide doit dissoudre au moins 0,5 % et au plus 15 % en poids d'alumine des agglomérés. Sa concentration dans le milieu aqueux de traitement doit être inférieure à 20 % en poids et de préférence comprise entre 1 % et 15 %.

On utilisera de préférence les acides forts tels que l'acide nitrique, l'acide chlorhydrique, l'acide perchlorique, l'acide sulfurique ou des acides faibles mis en œuvre à une concentration telle que leur solution aqueuse présente un pH inférieur à environ 4.

On entend par composé apportant un anion capable de se combiner avec les ions aluminium en solution, tout composé capable de libérer en solution un anion A(— n) susceptible de former avec les cations Al(3 +) des produits dans lesquels le rapport atomique n(A/Al) est inférieur ou égal à 3. Un cas particulier de ces composés peut être illustré par les sels basiques de formule générale Al2(OH) × Av dans laquelle 0 < × < 6 : nv < 6 ; n représente le nombre de charges de l'anion A.

La concentration de ce composé dans le milieu aqueux de traitement doit être inférieure à 50 % en poids et de préférence comprise entre 3 % et 30 %.

On utilise de préférence les composés capables de libérer en solution les anions choisis parmi le groupe constitué par les anions nitrate, chlorure, sulfate, perchlorate, chloroacétate, dichloracétate, trichloracétate, bromoacétate, dibromacétate, et les anions de formule générale :

$$R-\overset{\overset{\displaystyle O}{\|}}{C}-O(-)$$

dans laquelle R représente un radical pris dans le groupe comprenant H, CH3, C2H5, CH3CH2CH2, (CH3)2CH.

Les composés capables de libérer en solution l'anion A(— n) peuvent opérer cette libération, soit directement par exemple par dissociation, soit indirectement par exemple par hydrolyse. Les composés peuvent notamment être choisis parmi le groupe comportant : les acides minéraux ou organiques, les anhydrides, les sels organiques ou minéraux, les esters. Parmi les sels minéraux on peut citer les sels alcalins ou alcalino-terreux solubles en milieu aqueux, comme ceux de sodium, de potassium, de magnésium ou de calcium, les sels d'ammonium, les sels d'aluminium, les sels de terres rares.

Parmi les métaux des groupes V, VI et VIII, on préfère le vanadium, le molybdène, le tungstène, le nickel, le fer et/ou le cobalt, particulièrement les associations de métaux telles que cobalt + molybdène, nickel + molybdène, nickel + tungstène, nickel + cobalt + molybdène, fer + cobalt + molybdène, ou nickel + vanadium. Ces métaux peuvent être introduits dans le catalyseur sous toute forme connue, par exemple comme molybdate d'ammonium, vanadate d'ammonium, tungstate d'ammonium, acétate ou nitrate de nickel, acétate ou nitrate de cobalt.

La première étape (a) — ou les premières étapes (a) — est mise en œuvre à une température généralement comprise entre 350 et 430 degrés C, de préférence entre 390 et 420 degrés lorsque l'on veut un maximum de conversion en fractions distillant normalement au-dessous de 550 degrés C (fraction 550—), sous une pression de 5 à 20 Mégapascals, de préférence 10 à 20, pour le maximum de conversion en fraction 550—, avec un débit horaire de charge liquide (VVH) compris entre 0,2 et 2,0, de préférence entre 0,2 et 1 pour le maximum de conversion en fraction 550—. La quantité d'hydrogène mélangé à la charge est habituellement comprise entre 500 et 3 000 $Nm^3$ par $m^3$ de charge liquide. On opère utilement en présence d'hydrogène sulfuré et la pression partielle d'hydrogène sulfuré est à l'étape (a) comprise entre 0,005 fois et 0,20 fois, de préférence entre 0,02 et 0,15 fois la pression totale.

L'étape (b) est mise en œuvre dans des gammes de températures, pression, VVH, et rapport hydrogène sur charge incluses dans les limites extrêmes citées ci-dessus pour l'étape (a) mais de préférence à une température et une pression plus faibles et à une VVH plus élevée. La pression partielle d'hydrogène sulfuré est de préférence plus basse à l'étape (b) qu'à l'étape (a). On peut la fixer entre 10 et 90 % de la valeur fixée à l'étape (a), de préférence entre 20 et 80 %. Les réductions de température et/ou pression partielle d'hydrogène sulfuré entre deux étapes successives peuvent être réalisées au moyen de systèmes de trempe à l'hydrogène frais bien connus de l'homme de l'art (« quenches »).

Chaque étape peut être mise en œuvre indifféremment selon les techniques dites lit fixe, lit mobile, et lit bouillonnant bien connues de l'homme de l'art. Toutefois le procédé de l'invention sera mis en œuvre de manière préférée en utilisant le lit fixe pour la première étape et le lit mobile pour toutes les autres étapes.

Les charges qui peuvent être traitées selon l'invention sont par exemple les résidus de distillation atmosphérique et sous vide, les huiles désasphaltées, les pétroles bruts de toute origine, les sables et schistes bitumeux et leurs extraits, les asphaltes en mélange avec au moins 15 % en poids de distillat aromatique, les charges précitées en mélange avec un distillat, et les hydrogénats de charbon. Ces charges renferment habituellement au moins 10 ppm en poids de métaux (nickel et/ou vanadium) et au moins 0,5 % en poids de soufre.

Exemple 1

On traite 5 kg de billes d'alumine obtenues selon le procédé décrit dans le brevet français numéro 1 438 497 dans un réacteur de dix litres. Ces billes présentent les caractéristiques suivantes :

Surface spécifique : 192 $m^2/g$
Volume poreux total : 0,84 $cm^3/g$
Volume des pores de diamètre moyen inférieur à 10 nanomètres : 0,06 $cm^3/g$
Volume des pores de diamètre moyen compris entre 10 et 100 nanomètres : 0,40 $cm^3/g$
Volume des pores de diamètre moyen compris entre 100 et 500 nanomètres : 0,10 $cm^3/g$
Volume des pores de diamètre moyen compris entre 500 et 1 000 nanomètres : 0,10 $cm^3/g$
Volume des pores de diamètre moyen supérieur à 1 000 nanomètres : 0,18 $cm^3/g$

Le traitement est effectué en phase vapeur à une température de 195 degrés C pendant un temps de 3 heures. Le milieu de traitement est constitué par un mélange d'acide nitrique de contrentation 7 g pour 100 g Al203 et d'acide acétique de concentration 10 g pour 100 g Al203. L'acide nitrique permet de dissoudre environ 2,5 % en poids des billes d'alumine. L'acide acétique apporte l'anion acétate qui se combine avec les ions aluminium en solution pour former des composés dans lesquels le rapport atomique CH3COOH/Al sera inférieur à 3. Les billes ainsi traitées sont activées thermiquement à 900 degrés C pendant deux heures dans un four. Elles présentent alors les caractéristiques suivantes :

Densité de remplissage tassé : 0,46 $g/cm^3$
Granulométrie : 2 à 4 mm
Volume poreux total : 1,10 $cm^3/g$
Surface spécifique : 115 $m^2/g$
Volume de pores de diamètre moyen inférieur à 10 nanomètres : 0,03 $cm^3/g$
Volume de pores de diamètre moyen compris entre 10 et 100 nanomètres : 0,72 $cm^3/g$
Volume des pores de diamètre moyen compris entre 100 et 500 nanomètres : 0,15 $cm^3/g$
Volume des pores de diamètre moyen compris entre 500 et 1 000 nanomètres : 0,12 $cm^3/g$
Volume des pores de diamètre moyen supérieur à 1 000 nanomètres : 0,08 $cm^3/g$
3

On voit donc que le traitement a permis d'éliminer presque entièrement les pores de diamètre moyen inférieur à 10 nanomètres, d'augmenter la quantité de pores de diamètre moyen compris entre 10 et 100 nanomètres, et de diminuer la quantité de pores de diamètre moyen supérieur à 1 000 nanomètres.

Les billes d'alumine ainsi préparées sont essentiellement inertes au test de craquage du normal heptane, c'est-à-dire qu'elles présentent dans ce test une activité inférieure à 15 millionièmes de mole de normal heptane craquées par heure et par mètre carré de surface spécifique à 500 degrés C et inférieure à 5 millionièmes de mole/h/$m^2$ à 470 degrés C. Ce test est réalisé en présence d'hydrogène, le rapport des débits d'hydrogène et d'heptane étant égal à 4 normaux litres par litre, et la vitesse spatiale horaire de 1,5 gramme de charge liquide par gramme d'alumine et par heure. On a obtenu pour les billes préparées comme indiqué ci-dessus des activités spécifiques de 0,6 millionième de mole/heure/$m^2$ à 470 degrés C et 8,0 millionièmes de mole/heure/$m^2$ à 500 degrés C.

376,2 grammes d'heptamolybdate d'ammonium quadrihydrate sont pesés exactement, puis mis en solution dans 1 000 $cm^3$ d'eau distillée dans un réacteur agité chauffé à 60 degrés C. Séparément, 256,06 g de nitrate de nickel hexahydrate sont pesés exactement puis dissous à température ambiante dans un réacteur agité contenant 1 000 $cm^3$ d'eau distillée. Les deux solutions ainsi préparées sont ensuite mélangées, puis la température de ce mélange constituant la solution B est ajustée à 25 degrés C. Sans attendre, 450 $cm^3$ de la solution B sont prelevés et dilués par 150 $cm^3$ d'eau distillée. On obtient la solution A3. 1 litre de la solution B restante est dilué par 1 litre d'eau distillée pour donner la solution A2. 1 litre de solution A2 est dilué par un litre d'eau distillée pour donner la solution A1. Un litre de solution A1 est dilué par un litre d'eau distillée pour donner la solution A. 5 lots de 460 grammes de billes d'alumine obtenues à l'étape précédente sont constitués. 506 $cm^3$ de chacune des solutions A, B, A1, A2, A3 sont mis au contact de chacun des lots de billes d'alumine par la technique d'imprégnation à sec bien connue de l'homme de l'art. Les lots de billes imprégnées sont ensuite maintenus pendant 12 heures en atmosphère confinée, saturée de vapeur d'eau, puis séchés par un courant d'air sec à 110 degrés C. Les lots de billes séchées sont ensuite calcinés dans un four rotatif chauffé directement par une flamme de combustion d'abord deux heures à 350 degrés C puis deux heures à 500 degrés C, cette dernière calcination constituant l'opération finale dans la préparation des catalyseurs. A partir des lots imprégnés par les solutions on obtient respectivement 1 litre de chacun des cinq catalyseurs référencés de la même façon A, B, A1, A2, A3.

L'analyse chimique des catalyseurs préparés a donné les compositions rapportées au tableau 1, exprimées en % poids. Ces catalyseurs avaient donc le même support et des compositions chimiques analogues avec des teneurs en métaux actifs, molybdène et nickel, très différentes et croissantes dans l'ordre A, A1, A2, A3, B. Pour tous ces catalyseurs, le rapport atomique (nickel/(nickel + molybdène)) est égal à 0,30.

Composition chimique des catalyseurs préparés à l'exemple 1

Tableau 1

| Catalyseur: | A | B | A1 | A2 | A3 |
|---|---|---|---|---|---|
| % Al2O3 : | 97.875 | 83.0 | 95.75 | 91.5 | 87.25 |
| % MoO3 : | 1.75 | 14.0 | 3.5 | 7.0 | 10.5 |
| % NiO : | 0.375 | 3.0 | 0.75 | 1.5 | 2.25 |

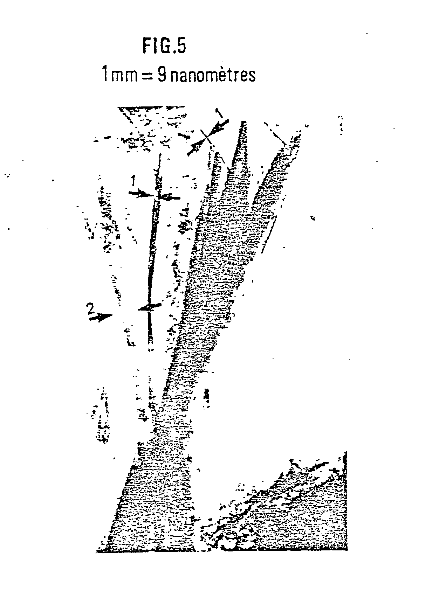

Les figures 1 à 4 présentent des microphotographies du catalyseur A effectuées au moyen d'un microscope électronique à balayage de marque JEOL, modèle JSM 35 CF, aux grandissements respectifs 300, 3 000, 10 000 et 20 000. Les échelles indiquées sur chaque photographie permettent de mesurer les dimensions des détails observables. Les parties sombres correspondent à la porosité, tandis que les parties claires correspondent à la matière catalytique. On peut voir que le catalyseur A possède bien une structure « en oursins », à savoir une juxtaposition d'agglomérats ayant en majorité une dimension moyenne de 3,5 micromètres, chaque agglomérat étant formé de plaquettes allongées aciculaires, assemblées généralement radialement par rapport au centre des agglomérats. Les dimensions des plaquettes aciculaires sont mesurables en particulier sur la figure 5, qui est une microphotographie prise au grossissement nominal 200 000 avec un microscope électronique à transmission à balayage (S.T.E.M. VG HB5). Les plages sombres correspondent cette fois à la matière catalytique. L'échelle de cette microphotographie est de 9 nanomètres pour un millimètre. Les intervalles délimités par des flèches opposées repérées 1 et 2 correspondent respectivement aux traces de plaquettes aciculaires disposées perpendiculairement et paralèllement au plan de l'image. Les intervalles 1 donnent donc une mesure approximative de l'épaisseur des plaquettes et l'intervalle 2 une mesure de largeur de plaquettes, soit respectivement environ 2 à 4 nanomètres et 60 nanomètres. Suivant leur axe de plus grand développement, les plaquettes de la figure 5 ont une longueur de l'ordre de 0,5 à 1 micromètre, ce qui est en accord avec les longueurs mesurables sur la figure 4 où l'on voit ces plaquettes disposées dans les agglomérats. Le rapport de la longueur moyenne à la largeur moyenne est donc d'environ 8 à 16 et le rapport de la longueur moyenne à l'épaisseur moyenne est d'environ 120 à 480. L'examen au microscope à balayage dans les mêmes conditions que pour le catalyseur A, des catalyseurs B, A1, A2, A3 a donné le même résultat, autrement dit tous ces catalyseurs possèdaient la même structure en oursins.

Les catalyseurs ainsi préparés ont été mis en œuvre dans une unité pilote d'hydrotraitement équipée de cinq réacteurs séparés disposés en série, à raison de 250 $cm^3$ de catalyseur par réacteur. Un dispositif d'échantillonnage des produits liquides et gazeux avait été prévu à la sortie de chaque réacteur de façon à pouvoir mesurer séparément les performances de chaque zone catalytique.

5 essais différents ont été réalisés avec des catalyseurs ou combinaisons de catalyseurs indiquées dans le tableau 2. Pour tous ces essais on a maintenu constante la vitesse spatiale horaire globale, en ajustant le débit horaire de charge en fonction de la quantité totale de catalyseur mise en œuvre. La charge utilisée pour ces essais était une huile désasphaltée (D.A.O.) de brut de BOSCAN dont les principales caractéristiques sont indiquées au tableau 3. Tous les catalyseurs ont été présulfurés dans les mêmes conditions au début de chaque essai. Les essais ont été conduits de façon à comparer les systèmes catalytiques sur le plan des performances en conversion en fractions distillant normalement en dessous de 550 degrés, en démétallation, et en désulfuration, et également sur le plan de la stabilité dans le temps de ces performances. Les conditions de présulfuration et d'essai sont réunies dans le tableau 4.

Les résultats des essais sont rassemblés dans le tableau 5. On a relevé dans ce tableau les performances obtenues au bout de 48 heures de fonctionnement, puis de 1 500 heures, en démétallation (HDM), désulfuration (HDS) et conversion en fraction 550— (Conv 550—).

Les résultats présentés au tableau 5 montrent clairement l'amélioration apportée par le procédé selon l'invention : le catalyseur A seul réalise une HDM supérieure ou égale à 80 % et une conversion en distillats 550- de l'ordre de 30 % et ce de façon très stable au cours du temps malgré la forte teneur en nickel et vanadium de cette charge de DAO. En revanche la désulfuration est faible. Le catalyseur B seul réalise de bonnes performances initiales en HDM et conversion, et de façon assez suprenante une performance relativement médiocre en HDS. Ce catalyseur s'avère très instable comme l'indique son activité résiduelle très faible pour les trois fonctions au bout de 1 500 heures de marche. L'association B + A a des performances et une stabilité inférieures à celles de B seul. Au contraire, l'association A + B selon l'invention permet une marche très stable du système catalytique, avec des performances toujours supérieures à 85 % en désulfuration. L'association A + A1 + A2 + A3 + B également possible selon l'invention possède une stabilité comparable à celle de A + B, et réalise un raffinage légèrement plus poussé. Cet exemple illustre donc le grand intérêt de l'hydrotraitement en au moins deux étapes d'une fraction lourde d'hydrocarbure riche en soufre et en impuretés métalliques, la première étape effectuée

dans le réacteur contenant le catalyseur A réalisant spécifiquement de façon très stable la démétallation et la conversion, et la dernière étape effectuée dans le réacteur contenant le catalyseur B réalisant la désulfuration poussée. La stabilité de la désulfuration est rendue possible par la démétallation de la ou des étapes précédentes.

Systèmes catalytiques utilisés pour les essais (250 $cm^3$ de catalyseur par réacteur)

Tableau 2

| Essai | Reacteur 1 | Reacteur 2 | Réacteur 3 | Reacteur 4 | Reacteur 5 |
|---|---|---|---|---|---|
| 1 | A | - | - | - | - |
| 2 | B | - | - | - | - |
| 3 | A | B | - | - | - |
| 4 | B | A | - | - | - |
| 5 | A | A1 | A2 | A3 | B |
| 6 | A | HR 306 | - | - | - |
| 7 | A | HR 346 | - | - | - |
| 8 | A | B | - | - | - |
| 9 | A | B | - | - | - |

Caractéristiques de la charge d'huile désasphaltée (DAO) de Brut de BOSCAN utilisée pour les essais 1 à 7.

Tableau 3

| | |
|---|---|
| Densite a 20 deores C (q/cm3) | 0.989 |
| Viscosite a 100 deores C (mm2/s) | 161 |
| " 150 " " | 25.3 |
| Carbone Conradson ( % poids ) | 10.3 |
| insolubles au n-heptane ( % poids ) | 0.17 |
| Insolubles au n-pentane ( % poids ) | 1.7 |
| soufre total ( % poids ) | 5.16 |
| Nickel ( ppm ) | 47 |
| Vanadium ( ppm ) | 400 |
| Fraction distillant en dessous de 550 deores C ( % poids ) | 50 |

Conditions opératoires et procédure de présulfuration choisies pour les essais 1 à 7.

Tableau 4

| | |
|---|---|
| Pression totale ( MPa ) | : 10 |
| Vitesse spatiale horaire ( 1/1/h ) | : 1 |
| Rapport Hydrogene/charge ( Nl/l ) | : 1000 |
| Temperature ( deores C ) | : 380 |
| Presulfuration du catalyseur par un melanoe oazeux hydrogene + 3 % en volume d'hydrogene sulfure , a 350 deores C et 1 bar, pendant six heures . | |

Résultats des essais comparatifs d'hydrotraitement de DAO de l'exemple 1

Tableau 5

| | essai 1 | essai 2 | essai 3 | essai 4 | essai 5 |
|---|---|---|---|---|---|
| systeme catalytique | A | B | A + B | B + A | A+A1+A2+A3+B |
| apres 48 h. | | | | | |
| HDM ( % ) | 85.0 | 95.0 | 99.0 | 90.0 | 99.2 |
| HDS ( % ) | 45.0 | 52.0 | 86.0 | 48.0 | 88.0 |
| Conv 550− ( % ) | 30.0 | 32.0 | 30.5 | 31.0 | 31.0 |
| apres 1500 h. | | | | | |
| HDM ( % ) | 80.0 | 15.0 | 98.5 | 12.5 | 99.0 |
| HDS ( % ) | 40.0 | 10.5 | 85.2 | 6.5 | 86.0 |
| Conv 550− ( % ) | 28.0 | 21.5 | 31.0 | 18.0 | 31.5 |

## Exemple 2

Le catalyseur A de l'exemple 1 est associé aux catalyseurs HR 306 d'une part et HR 346 d'autre part. Ces catalyseurs d'hydrodésulfuration sont commercialisés par la société française PROCATALYSE. Les associations A + HR 306 d'une part et A + HR 346 d'autre part sont testées dans les conditions et avec la charge décrites à l'exemple 1 sous les références respectives : essai 6 et essai 7. Les performances obtenues sont résumées dans le tableau 6. Cet exemple montre que l'utilisation d'un catalyseur connu de l'homme de l'art à la dernière étape de désulfuration est également possible selon l'invention. Toutefois les performances enregistrées après 1 500 heures de marche révèlent que la stabilité globale de cette association catalytique est inférieure à celle que l'on peut obtenir avec l'association préférée du type A + B dans laquelle les catalyseurs A et B ont le même support possédant la structure « en oursins » décrite plus haut et par surcroît inerte au test de craquage du normal heptane.

## Exemple 3

L'association des catalyseurs A dans le premier réacteur et B dans le deuxième réacteur de l'unité pilote mentionnée à l'exemple 1 est utilisée pour l'hydrotraitement d'une charge de résidu atmosphérique de SAFANYIA dont les caractéristiques sont indiquées au tableau 7. Les conditions opératoires choisies sont plus sévères que pour les essais précédents. Elles sont résumées au tableau 8. Les résultats obtenus sont rassemblés dans le tableau 6 (essai 8). Les caractéristiques des produits intermédiaires, c'est-à-dire obtenus à l'issue de la première étape, et finaux sont également indiquées au tableau 7.

Cet exemple montre que le procédé selon l'invention permet d'effectuer un raffinage très profond d'un résidu atmosphérique réputé réfractaire, et ceci avec une très bonne stabilité de performances à long terme.

## Exemple 4

On répète l'essai de l'exemple 3, mais avec une charge d'asphalte mélangé à 35 % en poids de distillat aromatique provenant du procédé de craquage catalytique (LCO). Les résultats de cet essai, référence essai 9, sont indiqués dans le tableau 7. Les principales caractéristiques de cette charge d'asphalte dilué ainsi que celles des produits intermédiaires (après la première étape sur le catalyseur A) et finaux sont rassemblées dans le tableau 9. On peut constater que le procédé selon l'invention permet également de traiter ce type de charges très asphalténiques avec succès et de façon stable, ce qui était impossible selon l'art antérieur. Le résidu atmosphérique, ou fraction de point d'ébullition supérieur à 350 degrés C, du produit final de cet hydrotraitement représente environ 50 % poids et il répond aux caractéristiques normales d'un combustible liquide dit fuel numéro 2.

(Voir Tableau 6 page 9.)

Tableau 6

| | essai 6 | essai 7 | essai 3 | essai 8 | essai 9 |
|---|---|---|---|---|---|
| systeme catalytique | A +HR306 | A +HR346 | A + B | A + B | A + B |
| apres 48 h. | | | | | |
| HDM ( % ) | 95.0 | 95.0 | 99.0 | 99.4 | 99.1 |
| HDS ( % ) | 86.5 | 88.0 | 86.0 | 95.7 | 95.6 |
| Conv 550- ( % ) | 30.0 | 31.5 | 30.5 | 45.0 | 70.0 |
| apres 1500 h. | | | | | |
| HDM ( % ) | 93.0 | 15.0 | 98.5 | 99.0 | 98.3 |
| HDS ( % ) | 82.5 | 82.0 | 85.2 | 92.5 | 89.0 |
| Conv 550- ( % ) | 28.0 | 28.5 | 31.0 | 43.0 | 65.7 |

Caractéristiques de la charge de résidu atmosphérique de brut SAFANYIA utilisée pour l'essai 8 et des produits intermédiaires (A) et finaux (A + B) obtenus.

Tableau 7

| | charge | A | A+B |
|---|---|---|---|
| Densite a 20 degres C (g/cm3) | 0.996 | 0.900 | 0..75 |
| Viscosite à 100 degres C (mm2/s) | 208 | 3.25 | |
| " 150 " " | 32 | 1.59 | |
| Carbone Conradson (% poids) | 15.2 | 5.9 | 3.0 |
| Insolubles au n-heptane (% poids) | 7.8 | 1.7 | 0.2 |
| Insolubles au n-pentane (% poids) | 17.0 | 6.5 | 2.5 |
| soufre total ( % poids ) | 4.92 | 1.1 | 0.17 |
| Nickel ( ppm ) | 37 | 1 | 0.5 |
| Vanadium ( ppm ) | 101 | 2 | 0.5 |
| Fraction distillant en dessous de 550 degres C ( % poids ) | 42.5 | 82 | 85 |

Conditions opératoires et procédure de présulfuration choisies pour les essais effectuées sur résidus et asphaltes.

Tableau 8

| | |
|---|---|
| Pression totale ( MPa ) | : 14 |
| Premiere etape ( catalyseur A ) | |
| Vitesse spatiale horaire ( 1/1/h ) | : 0.3 |
| Temperature ( degres C ) | : 410 |
| Deuxieme etape ( catalyseur B ) | |
| Vitesse spatiale horaire ( 1/1/h ) | : 1.5 |
| Rapport hydrogene/charge ( Nl/l ) | : 1000 |
| Vitesse spatiale horaire globale pour l'association A + B ( 1/1/h ) | : 0.25 |
| Presulfuration du catalyseur par un melange gazeux hydrogene + 3 % en volume d'hydrogene sulfure , a 350 degres C et 1 bar , pendant six heures . | |

Caractéristiques de la charge d'asphalte dilué par 35 % poids de LCO utilisée pour l'essai 9, et des produits intermédiaires et finaux obtenus.

Tableau 9

| | charge | A | A+B |
|---|---|---|---|
| Densite à 20 degres C (g/cm3) | 1.065 | 0.960 | 0.916 |
| Viscosite a 100 degres C (mm2/s) | 1000 | 3.40 | |
| " 150 " " | 110 | 1.62 | |
| Carbone Conradson ( % poids ) | 27.5 | 12.0 | 6.0 |
| Insolubles au n-heptane (% poids) | 22.5 | 7.0 | 1.10 |
| Insolubles au n-pentane (% poids) | 54.0 | 6.5 | 3.0 |
| soufre total ( % poids ) | 5.55 | 1.6 | 0.24 |
| Nickel ( ppm ) | 70 | 12.4 | 0.6 |
| Vanadium ( ppm ) | 240 | 43.2 | 2.0 |
| Fraction distillant en dessous de 550 degres C ( % poids ) | 35 | 73 | 75 |

**Revendications**

1. Procédé d'hydrotraitement en au moins deux étapes d'une fraction lourde d'hydrocarbures contenant des impuretés soufrées et des impuretés métalliques, caractérisé par les étapes suivantes :

a) Dans au moins une première étape, dite d'hydrodémétallation, on fait passer la charge d'hydrocarbures et d'hydrogène sur un catalyseur renfermant un support de 0,1 à 5 % en poids, comptés en oxydes métalliques, d'au moins un métal ou composé de métal de l'un au moins des groupes V, VI et VIII de la classification périodique des éléments et se présentant sous forme d'une pluralité d'agglomérats juxtaposés formés chacun d'une pluralité de plaquettes aciculaires, les plaquettes de chaque agglomérat étant orientées généralement radialement les unes par rapport aux autres et par rapport au centre de l'agglomérat, et :

b) Dans au moins une étape subséquente dite d'hydrodésulfuration, on fait passer le produit de l'étape (a) et de l'hydrogène sur un catalyseur renfermant un support de 7 à 30 % en poids comptés en oxydes métalliques, d'au moins un métal ou composé de métal de l'un au moins des groupes V, VI, et VIII de la classification périodique des éléments.

2. Procédé selon la revendication 1, dans lequel les conditions de l'étape (a) sont choisies pour réaliser 60 à 95 % de démétallation de la charge, 20 à 99 % de conversion de la fraction de charge bouillant normalement au-dessus de 550 degrés C en distillats de point d'ébullition inférieur, et moins de 70 % de désulfuration et les conditions de l'étape (b) sont choisies pour porter le taux global de désulfuration à au moins 85 %.

3. Procédé selon la revendication 1 ou 2 dans lequel les conditions opératoires comprennent une température de 350 à 430 degrés C, une pression totale de 5 à 20 MPa, et une vitesse spatiale horaire globale de charge liquide de 0,2 à 2.

4. Procédé selon la revendication 1, dans lequel au moins 50 % des plaquettes aciculaires ont une dimension suivant leur axe de plus grand développement de 0,05 à 5 micromètres, un rapport de cette dimension à leur largeur moyenne de 2 à 20 et un rapport de cette dimension à leur épaisseur moyenne de 1 à 5 000.

5. Procédé selon la revendication 4, dans lequel le catalyseur se présente sous forme d'une collection de particules approximativement sphériques de taille moyenne comprise entre 1 et 20 micromètres.

6. Procédé selon l'une quelconque des revendications 1 à 5, selon lequel le support est l'alumine.

7. Procédé selon l'une des revendications 1 à 6 selon lequel le support du catalyseur de l'étape (a) est inerte au test de craquage du normal heptane.

8. Procédé selon l'une des revendications 1 à 7 selon lequel on opère en présence de sulfure d'hydrogène.

9. Procédé selon la revendication 8 dans lequel la pression partielle moyenne du sulfure d'hydrogène est à l'étape (b) comprise entre 10 et 90 % de sa valeur à l'étape (a) où elle est égale à entre 0,005 et 0,2 fois la pression totale.

10. Procédé selon l'une des revendications 1 à 9, dans lequel le catalyseur de la dernière zone de réaction renferme au moins un composé de molybdène et/ou tungstène et au moins un composé de nickel et/ou cobalt, le rapport pondéral des métaux nickel et/ou cobalt aux métaux molybdène et/ou tungstène étant de 0,2 : 1 à 0,5 : 1.

11. Procédé selon l'une des revendications 1 à 10, dans lequel la fraction lourde d'hydrocarbures est un résidu de distillation, un pétrole brut, une huile désasphaltée, un asphalte dissous dans au moins 15 % en poids de distillat aromatique, ou un hydrogénat de charbon.

12. Procédé selon l'une quelconque des revendications 1 à 11, dans lequel la fraction lourde d'hydrocarbures renferme au moins 10 parties par million en poids d'impuretés métalliques et au moins 0,5 % en poids de soufre.

**Claims**

1. A process for the hydrotreatment, in at least two steps, of a heavy hydrocarbon fraction containing sulfur impurities and metal impurities, characterized by the following steps :

a) At least one so-called hydrodemetallation first step, wherein the hydrocarbon charge and hydrogen are passed over a catalyst comprising a carrier and from 0.1 to 5 % by weight, calculated as metal oxides, of at least one metal or compound of a metal from at least one of groups V, VI and VIII of the periodic classification of elements, said catalyst being in the form of a plurality of juxtaposed conglomerates each formed of a plurality of acicular plates, the plates of each conglomerate being generally oriented radially with respect to one another and with respect to the center of the conglomerate, and :

b) At least one subsequent so-called hydrodesulfuration step, wherein the product from step (a) and hydrogen are passed over a catalyst containing a carrier and from 7 to 30 % by weight, calculated as metal oxides, of at least one metal or compound of a metal from at least one of groups V, VI and VIII of the periodic classification of elements.

2. A process according to claim 1, wherein the conditions of step (a) are so selected as to effect 60 to 95 % of demetallation of the charge, 20 to 99 % of conversion of the charge fraction normally boiling above 550 °C to distillates of lower boiling point and less than 70 % of desulfuration and the conditions of step (b) are so selected as to increase the total desulfuration rate to at least 85 %.

3. A process according to claim 1 or 2, wherein the operating conditions comprise a temperature from 350 to 430 °C, a total pressure from 5 to 20 MPa and a total hourly space velocity of the liquid charge from 0.2 to 2.

4. A process according to claim 1, wherein at least 50 % of the acicular plates have a size along their longer axis of 0.05 to 5 micrometers, a ratio of said size to their average width from 2 to 20 and a ratio of said size to their average thickness from 1 to 5 000.

5. A process according to claim 4, wherein the catalyst is in the form of a collection of approximately spherical particles of an average size from 1 to 20 micrometers.

6. A process according to anyone of claims 1 to 5, wherein the carrier is alumina.

7. A process according to one of claims 1 to 6, wherein the catalyst carrier of step (a) is inert in the normal heptane cracking test.

8. A process according to one of claims 1 to 7, wherein the operation is conducted in the presence of hydrogen sulfide.

9. A process according to claim 8, wherein the average partial pressure of hydrogen sulfide in step (b) is from 10 to 90 % of its corresponding value in step (a) where it ranges from 0.005 to 0.2 time the total pressure.

10. A process according to one of claims 1 to 9, wherein the catalyst of the ultimate reaction zone comprises at least one molybdenum and/or tungsten compound and at least one nickel and/or cobalt compound, the ratio by weight of the nickel and/or cobalt metals to the molybdenum and/or tungsten metals being from 0.2 : 1 to 0.5 : 1.

11. A process according to one of claims 1 to 10, wherein the heavy hydrocarbon fraction is a distillation residue, a crude oil, a deasphalted oil, an asphalt dissolved in at least 15 % by weight of aromatic distillate, or a coal hydrogenate.

12. A process according to anyone of claims 1 to 11, wherein the heavy hydrocarbon fraction contains at least 10 parts per million by weight of metal impurities and at least 0.5 % by weight of sulfur.

**Patentansprüche**

1. Verfahren zum Hydrotreatment einer schweren Kohlenwasserstoff-Fraktion in wenigstens zwei Stufen, welche schwefelhaltige und metallische Verunreinigungen enthält, gekennzeichnet durch die folgenden Stufen :

a) in wenigstens einer ersten Stufe, der sog. Hydrodemetallisierung, veranlaßt man die Charge aus Kohlenwasserstoffen und Wasserstoff über einen Katalysator zu streichen, der einen Träger und 0,1 bis 0,5 Gew.-%, gerechnet als metallische Oxide, wenigstens eines Metalls oder einer Verbindung eines Metalls wenigstens einer der Gruppen V, VI und VIII des Periodensystems der Elemente enthält und in Form einer Vielzahl nebeneinander befindlicher Agglomerate vorliegt, die jeweils aus einer Vielzahl nadelkristallförmiger Plättchen gebildet sind, wobei die Plättchen jedes Agglomerats im wesentlichen radial bezüglich einander und bezüglich der Mitte des Agglomerats orientert sind und

b) in wenigstens einer nachfolgenden Stufe, der sog. Hydrodesulfurierung, läßt man das Produkt der Stufe (a) und Wasserstoff über einen Katalysator streichen, der einen Träger und 7 bis 30 gew.-%, gerechnet als metallische Oxide, wenigstens eines Metalls oder einer Verbindung eines Metalls wenigstens einer der Gruppen V, VI und VIII des Periodensystems der Elemente enthält.

2. Verfahren nach Anspruch 1, dadurch gekennzeichnet, daß die Bedingungen der Stufe (a) gewählt werden, um 60 bis 95 % Demetallisierung der Charge, 20 bis 99 % Umwandlung der normalerweise oberhalb 550 °C siedenden Chargenfraktion in Destillate mit einem niedrigeren Siedepunkt sowie wenigstens 70 % Desulfurierung zu erreichen und wobei die Bedingungen der Stufe (b) so gewählt sind, daß der globale Desulfurierungsgrad auf wenigstens 85 % gebracht wird.

3. Verfahren nach Anspruch 1 oder 2, dadurch gekennzeichnet, daß die Arbeitsbedingungen eine Temperatur von 350 bis 430 °C, einen Gesamtdruck von 5 bis 20 MPa und eine globale stündliche Raumgeschwindigkeit der flüssigen Charge von 0,2 bis 2 umfassen.

4. Verfahren nach Anspruch 1, dadurch gekennzeichnet, daß wenigstens 50 % der nadelkristallförmigen Plättchen eine Abmessung längs ihrer größten Entwicklungsachse von 0,05 bis 5 Mikrometer, ein Verhältnis dieser Abmessung zu ihrer mittleren Breite von 2 bis 20 und ein Verhältnis dieser Abmessung zu ihrer mittleren Dicke von 1 bis 5 000 aufweisen.

5. Verfahren nach Anspruch 4, dadurch gekennzeichnet, daß der Katalysator in Form einer Ansammlung von in etwa kugelförmigen Partikeln mit einer mittleren Abmessung zwischen 1 und 20 Mikrometern vorliegt.

6. Verfahren nach einem der Ansprüche 1 bis 5, dadurch gekennzeichnet, daß der Träger aus Aluminiumoxid bzw. Tonerde besteht.

7. Verfahren nach einem der Ansprüche 1 bis 6, dadurch gekennzeichnet, daß der Träger des Katalysators der Stufe (a) inert beim normal-Heptan-Cracktest ist.

8. Verfahren nach einem der Ansprüche 1 bis 7, dadurch gekennzeichnet, daß man in Anwesenheit von Wasserstoffsulfid arbeitet.

9. Verfahren nach Anspruch 8, dadurch gekennzeichnet, daß der mittlere Partialdruck des Wasserstoffsulfids in der Stufe (b) zwischen 10 und 90 % seines Wertes in der Stufe (a) beträgt, wo er gleich dem 0,005 bis 0,2-fachen des Gesamtdruckes ist.

10. Verfahren nach einem der Ansprüche 1 bis 9, dadurch gekennzeichnet, daß der Katalysator der letzten Reaktionszone wenigstens eine Verbindung von Molybdän und/oder Wolfram und wenigstens eine Verbindung von Nickel und/oder Kobalt enthält, wobei das Gewichtsverhältnis der Nickel- und/oder Kobaltmetalle zu den Molybdän- und/oder Wolframmetallen 0,2 : 1 bis 0,5 : 1 beträgt.

11. Verfahren nach einem der Ansprüche 1 bis 10, dadurch gekennzeichnet, daß die schwere Kohlenwasserstoff-Fraktion ein Destillationsrückstand, ein Rohöl, ein entasphaltisiertes Öl, ein Aslphalt, der in wenigstens 50 Gew.-% aromatischen Destillat gelöst ist oder ein Kohlenstoffhydrogenat ist.

12. Verfahren nach einem der Ansprüche 1 bis 11, dadurch gekennzeichnet, daß die schwere Kohlenwasserstoff-Fraktion wenigstens 10 Gewichts-ppm an metallischen Verunreinigungen und wenigstens 0,5 Gew.-% Schwefel enthält.

FIG.1

1cm = 33 µm

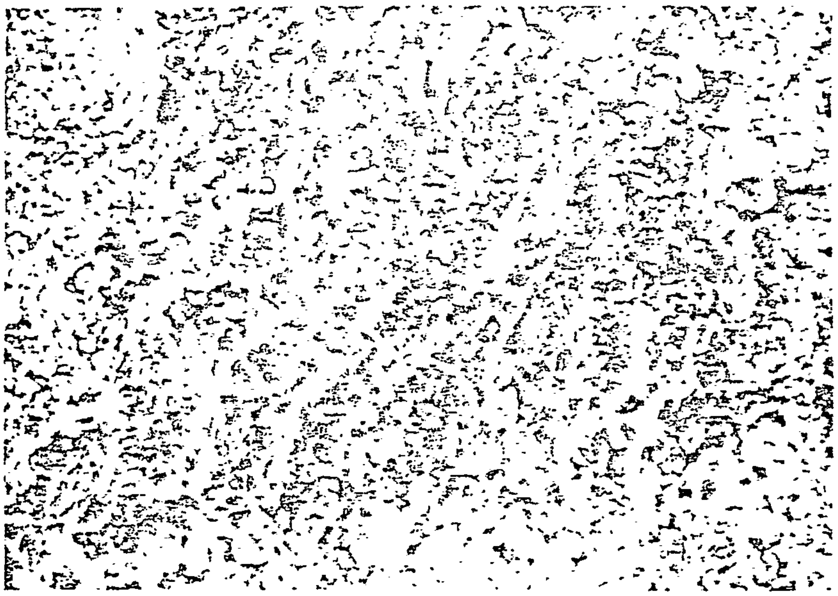

FIG.2

1cm = 3,3 µm

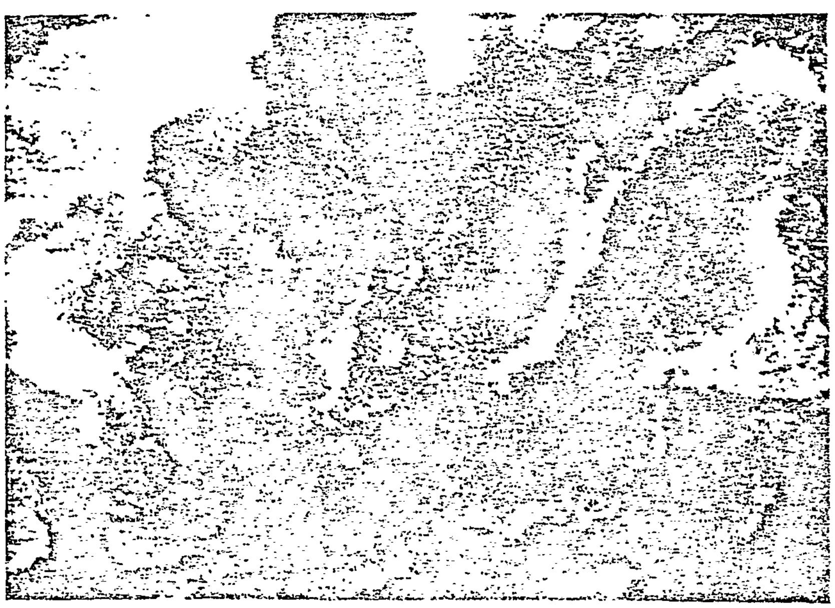

FIG.3

1cm=1 $\mu$m

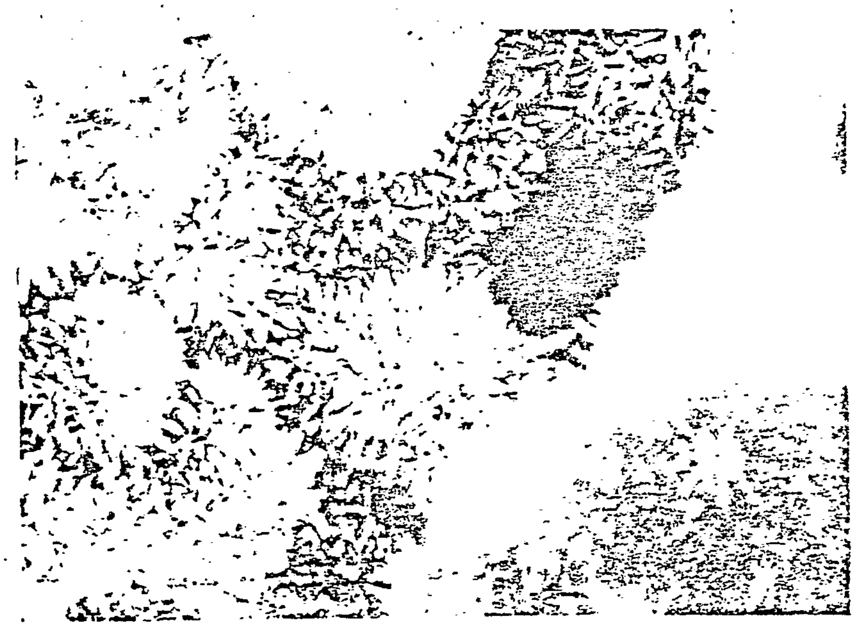

FIG.4

1cm=0,5 $\mu$m

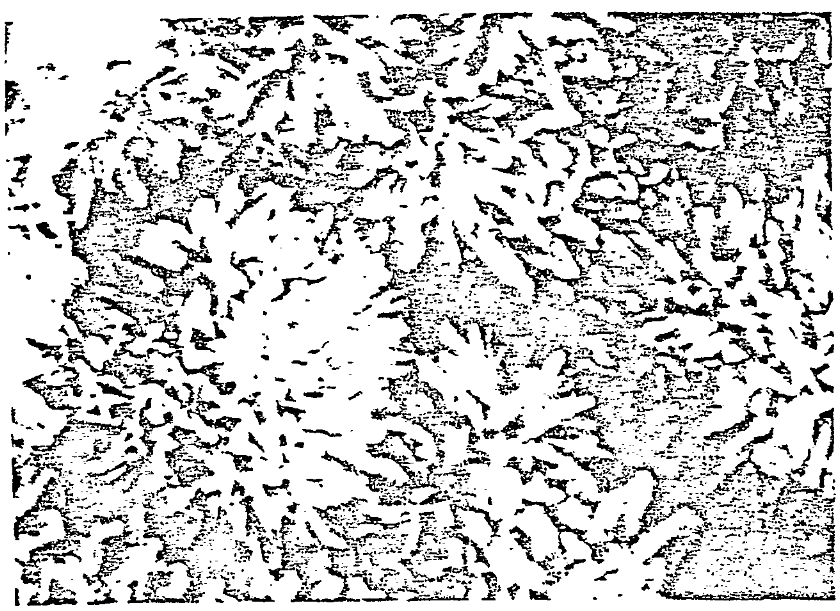

FIG.5

1mm = 9 nanomètres